# EUROPÄISCHE PATENTSCHRIFT

(11) **EP 2 059 764 B1**
(45) Veröffentlichungstag und Bekanntmachung des Hinweises auf die Patenterteilung: **10.09.2014**
(21) Anmeldenummer: 07802410.6
(22) Anmeldetag: 26.07.2007
(51) Int. Cl.: G01B 11/02, G01C 3/08, G01C 15/00, G01S 7/51, G01S 17/08

(54) **ENTFERNUNGSMESSGERÄT**
DISTANCE MEASURING DEVICE
APPAREIL DE MESURE À DISTANCE

(30) Priorität: 01.09.2006 DE 102006041077
(43) Veröffentlichungstag der Anmeldung: 20.05.2009
(73) Patentinhaber: Robert Bosch GmbH, 70442 Stuttgart (DE)
(72) Erfinder: SKULTETY-BETZ, Uwe, 70771 Leinfelden-Echterdingen (DE)
(86) Internationale Anmeldenummer: PCT/EP2007/057713
(87) Internationale Veröffentlichungsnummer: WO 2008/025619

(56) Entgegenhaltungen:
- EP-A- 1 720 040
- WO-A-2004/036246
- WO-A-2005/029122

## Beschreibung

### Stand der Technik

Die Erfindung geht aus von einem Entfernungsmessgerät nach dem Oberbegriff des Anspruchs 1.

Ein Entfernungsmessgerät zum Vermessen von Strecken ist bekannt. Dieses weist eine Steuereinheit auf, welche zum Durchführen von zumindest einem Betriebsmodus des Entfernungsmessgeräts vorgesehen ist.

Die WO 2005/029122A beschreibt ein Verfahren zur Interaktion zwischen einem Distanzvermesser und einer Vermessungsapplikation. Das hierbei zum Einsatz kommende System umfasst eine externe Rechnereinheit zum Ausführen der Vermessungsapplikation, ein Distanzmessgerät zum Messen einer Distanz zu eine Objekt und Aufnehmen eines von der Vermessungsapplikation verarbeitbaren Distanzmesswertes, und ein Fernsteuerelement, das zur Interaktion zwischen dem Distanzvermesser und der Vermessungsapplikation in drahtloser Kommunikationsverbindung mit der Rechnereinheit steht. Die Vermessungsapplikation ermöglicht die Darstellung von graphischen Konstruktionsobjekten auf Grundlage der aufgenommenen Messwerte auf einem Bildschirm der Rechnereinheit. Darüber hinaus offenbart die WO 2005/029122A ein Hand-Distanzmessgerät, in welchem das Distanzmesselement, das Fernsteuerelement für die drahtlose Kommunikationsverbindung und insbesondere Anzeigemittel und Eingabemittel innerhalb eines gemeinsamen Gehäuses angeordnet sind.

Die EP 1 720 040 A offenbart einen handhabbarer Computer, welcher bidirektional kommunizierend mit einem opto-elektronischen Entfernungsmessgerät integriert verbunden ist oder über eine Datenschnittstelle mit diesem verbindbar ist Der Computer der EP 1 720 040 A weist Rechenmittel und für die Markierung/Anzeige eines graphischen Objekts geeigneten Eingabemittel /Ausgabemittel auf, wobei ein zur Interaktion mit dem opto-elektronischen Entfernungsmessgerät ausgebildeter Algorithmus, welcher in mehrfach wiederholter Folge in einem Markierungsschritt auf ein durch den Nutzer bei einer Markierung eines im Ausgabemittel angezeigten Objekt eine bildlichen Darstellung mittels des Eingabemittels ausgelöstes Markierungsereignis hin sowie in einem zeitlich benachbarten Vermessungsschritt auf ein durch den Nutzer mittels des opto-elektronischen Entfernungsmessgerätes gemessenes Vermessungsergebnis ausgelöstes Vermessungsereignis hin wartet, worauf in einem späteren Zuordnungsschritt das Vermessungsergebnis dem markierten Objekt zugeordnet wird.

### Vorteile der Erfindung

Die Erfindung geht aus von einem Entfernungsmessgerät mit einer Steuereinheit.

Erfindungsgemäß wird vorgeschlagen, dass die Steuereinheit im Gehäuse des Entfernungsmessgerät angeordnet ist und einen Zeichenmodus aufweist, der zur Gestaltung einer Zeichnung vorgesehen ist. Unter einer "Gestaltung" der Zeichnung kann in diesem Zusammenhang insbesondere ein erstmaliges Herstellen der Zeichnung oder ein Bearbeiten einer vorliegenden Zeichnung verstanden werden. Dadurch können ein hoher Komfort und eine hohe Flexibilität in der Anwendung des Entfernungsmessgeräts erreicht werden. Die Zeichnung wird vorzugsweise anhand von Zeichendaten gestaltet, die durch einen Endbenutzer eingegeben werden, wie z.B. Zeichenanweisungen oder Streckeninformationen einer zu vermessenden oder vermessenen Strecke. Die Zeichendaten können ferner Streckenkenngrößen sein, die mittels einer Messeinheit des Entfernungsmessgeräts ermittelt sind. Die Steuereinheit weist vorzugsweise eine Speichereinheit auf, in welcher zumindest ein Programm zur Durchführung des Zeichenmodus aufgenommen ist. Die Gestaltung der Zeichnung kann durch Betätigen einer Tastatur des Entfernungsmessgeräts, z.B. durch eine Navigation in einem Zeichenprogramm, erfolgen.

Ein besonders hoher Bedienkomfort in der Gestaltung der Zeichnung kann erreicht werden, wenn das Entfernungsmessgerät eine berührungsempfindliche Eingabeeinheit aufweist, mittels welcher im Zusammenwirken mit der Steuereinheit die Zeichnung gestaltbar ist. Unter einer "berührungsempfindlichen Eingabeeinheit" soll in diesem Zusammenhang insbesondere eine Eingabeeinheit verstanden werden, die zur weitestgehend drucklosen Eingabe vorgesehen ist. Dabei kann die Eingabeeinheit mit einem Berührungsdetektor versehen sein, welcher z.B. mittels eines kapazitiven Sensierens eine Berührung, insbesondere eine drucklose Berührung einer Oberfläche der Eingabeeinheit, detektieren kann. Alternativ oder zusätzlich kann die Berührungsempfindlichkeit der Eingabeeinheit durch eine widerstandsgesteuerte Erfassung erreicht werden. Eine auf dem Prinzip einer Lichtschranke basierende Erfassung einer Berührung, insbesondere einer drucklosen Berührung, z.B. mittels Infrarotstrahlungsquellen, ist ebenfalls denkbar. In einer weiteren Ausführung kann die Eingabeeinheit ferner zum Detektieren der Berührung durch eine Schallwellen gesteuerte Erfassung, die z.B. durch den Einsatz von piezoelektrischen Elementen erreicht werden kann, vorgesehen sein.

Beispielsweise kann die Eingabeeinheit als Touchpad (oder integriertes Berührungsfeld) oder als Trackpoint (oder integrierter Bedienstift) ausgebildet sein. Die Eingabeeinheit kann ferner einen berührungsempfindlichen Bereich aufweisen, der von einer Anzeigeeinheit gebildet ist. Vorzugsweise ist die Eingabeeinheit von einem Touchscreen (oder Tastschirm) gebildet. Vorteilhafterweise ist das Entfernungsmessgerät mit einem Bedienstift versehen, welcher im Zusammenwirken mit der Eingabeeinheit zur Bedienung des Entfernungsmessgeräts eingesetzt werden kann.

Ferner wird vorgeschlagen, dass die Steuereinheit dazu vorgesehen ist, die Zeichnung anhand eines Skizzierens durch einen Bediener zu gestalten, wodurch eine besonders einfache und intuitive Gestaltung der Zeichnung erreicht werden kann.

Eine präzise Gestaltung der Zeichnung kann in diesem Zusammenhang erreicht werden, wenn die Steuereinheit dazu vorgesehen ist, eine durch einen Bediener skizzierte Strecke zumindest teilautomatisch zu verarbeiten. Beispielsweise kann eine durch den Bediener skizzierte Strecke durch die Steuereinheit geglättet und/oder in eine erwünschte Richtung ausgerichtet werden.

In einer alternativen Ausführungsform ist denkbar, dass die Steuereinheit dazu vorgesehen ist, die Zeichnung anhand von Bezugspunkten herzustellen, welche vom Bediener eingegeben sind. In einer weiteren Ausbildungsform ist möglich, dass der Bediener die Zeichnung anhand von vorgegebenen Zeichensymbolen gestaltet.

Es wird außerdem vorgeschlagen, dass das Entfernungsmessgerät eine Speichereinheit zum Speichern der Zeichnung aufweist. Dadurch kann die Flexibilität in der Anwendung weiter erhöht werden, indem z.B. Vermessungen von mehreren Räumen vorteilhaft archiviert werden können. Ferner kann der Bediener Zeichenvorlagen herstellen, diese in die Speichereinheit speichern und zu einem späteren Zeitpunkt zu einer Verarbeitung aufrufen.

In einer vorteilhaften Weiterbildung der Erfindung wird vorgeschlagen, dass die Steuereinheit dazu vorgesehen ist, die Zeichnung anhand von einem Messergebnis zumindest teilautomatisch zu gestalten. Es kann dadurch eine Zeichnung besonders präzise und einfach gestaltet werden. Insbesondere kann eine maßstabsgetreue Zeichnung eines vermessenen Raums erzielt werden.

Ein besonders hoher Bedienkomfort kann ferner erreicht werden, wenn die Steuereinheit dazu vorgesehen ist, die Zeichnung an ein Messergebnis anzupassen. Der Bediener kann zunächst eine Zeichnung, wie z.B. eine mittels einer berührungsempfindlichen Eingabeeinheit gestaltete Handskizze eines zu vermessenden Raums, herstellen und Vermessungen des Raums durchführen, wobei nach den Vermessungen die Steuereinheit die Zeichnung maßstabsgetreu an die Messergebnisse automatisch anpasst.

In einer weiteren Ausführungsform der Erfindung wird vorgeschlagen, dass das Entfernungsmessgerät eine Datenschnittstelle umfasst und die Steuereinheit ein Programm zur Durchführung des Zeichenmodus aufweist, das dazu vorgesehen ist, die Zeichnung anhand von Daten zu gestalten, die über die Datenschnittstelle gelesen sind. Dadurch kann die Flexibilität in der Anwendung des Entfernungsmessgeräts weiter erhöht werden.

Des Weiteren wird vorgeschlagen, dass die Steuereinheit einen Bedienmodus aufweist, in welchem einer durch die Zeichnung festgelegten Strecke ein Anzeigefeld zum Anzeigen einer Streckeninformation durch Eingabe eines Bedieners zuordenbar ist. Dadurch kann einfach durch eine flexible Ausgestaltung der Zeichnung die Lesbarkeit der Zeichnung erhöht werden. Unter einem "Anzeigefeld" kann in diesem Zusammenhang insbesondere ein Bereich einer Anzeigeeinheit des Entfernungsmessgeräts verstanden werden, dessen Dimension zur Anzeige einer Kenngröße, insbesondere einer Zahl und ggf. einer Einheit, abgestimmt ist. Eine besonders hohe Flexibilität in der Gestaltung der Zeichnung kann erreicht werden, wenn der Bedienmodus dazu vorgesehen ist, dass das Anzeigefeld in eine erwünschte Position relativ zur Zeichnung durch Eingabe des Bedieners platziert wird. Die durch die Zeichnung "festgelegte" Strecke kann eine in der Zeichnung dargestellte Strecke sein. Des Weiteren kann diese Strecke eine in der Zeichnung ungezeigte Strecke sein, die durch zwei Punkte der Zeichnung festgelegt ist, wie z.B. eine Diagonale.

Eine besonders einfache Bedienung des Entfernungsmessgeräts kann erreicht werden, wenn die Steuereinheit dazu vorgesehen ist, einem dargestellten und einer Strecke zugeordneten Symbol eine Steuerfunktion zum Steuern einer Messung der Strecke zuzuordnen. Es kann insbesondere eine aufwendige Navigation in einem angezeigten Menü vermieden werden. Beispielsweise kann der Messvorgang gestartet, gestoppt, wiederholt usw. werden. Dieses Symbol kann z.B. eine dargestellte Linie oder ein der Strecke zugeordnetes Anzeigefeld sein.

In einer weiteren Ausführungsvariante der Erfindung wird vorgeschlagen, dass das Entfernungsmessgerät eine Datenschnittstelle zur Herstellung einer Datenverbindung mit einer Druckeinheit umfasst und die Steuereinheit einen Druckmodus aufweist, in welchem die Steuereinheit anhand der Zeichnung Druckdaten an die Druckeinheit überträgt, wodurch besonders schnell und flexibel ein einen Raum betreffendes Dokument hergestellt werden kann. Besonders vorteilhaft kann die Datenschnittstelle als Adaptereinheit ausgebildet sein, an welcher die Druckeinheit, z.B. ein Thermodrucker, befestigt werden kann.

Ferner wird vorgeschlagen, dass das Entfernungsmessgerät eine Datenschnittstelle umfasst und die Steuereinheit einen Bedienmodus aufweist, der dazu vorgesehen ist, ein Programm zum Durchführen des Zeichenmodus über die Datenschnittstelle aus einer externen Dateneinheit herunterzuladen. Dabei kann vorteilhaft der Zeichenmodus aktualisiert und/oder wahlweise mit zusätzlichen Funktionen erweitert werden. Ein Programm zum Durchführen des Zeichenmodus kann ferner optional auf Wunsch eines Endbenutzers nach Herstellung des Entfernungsmessgeräts heruntergeladen werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Entfernungsmessgerät mit einem Touchscreen und einem Bedienstift,
- Fig. 2: eine schematische Darstellung des Touchscreens aus Figur 1, auf welchem eine Zeichnung mittels des Bedienstifts skizziert wird,
- Fig. 3: eine schematische Darstellung eines Zeichenmodus, in welchem eine Handskizze verarbeitet wird,
- Fig. 4: einen Zeichenmodus, in welchem ein Anzeigefeld mittels des Bedienstifts bewegt wird,
- Fig. 5: einen Zeichenmodus, in welchem eine Zeichnung an Messergebnisse angepasst wird,
- Fig. 6: einen Zeichenmodus, in welchem durch Betätigen eines Symbols ein Messvorgang gestartet wird,
- Fig. 7: einen Zeichenmodus, in welchem eine Zeichnung anhand von externen Daten hergestellt wird,
- Fig. 8: einen Bearbeitungsmodus, in welchem eine Tabelle mit Streckeninformationen hergestellt wird,
- Fig. 9: das Anschließen einer Druckeinheit an das Entfernungsmessgerät und
- Fig. 10: eine alternative Ausführungsform des Entfernungsmessgeräts mit einem Touchscreen und eines Bedienelements.

### Beschreibung der Ausführungsbeispiele

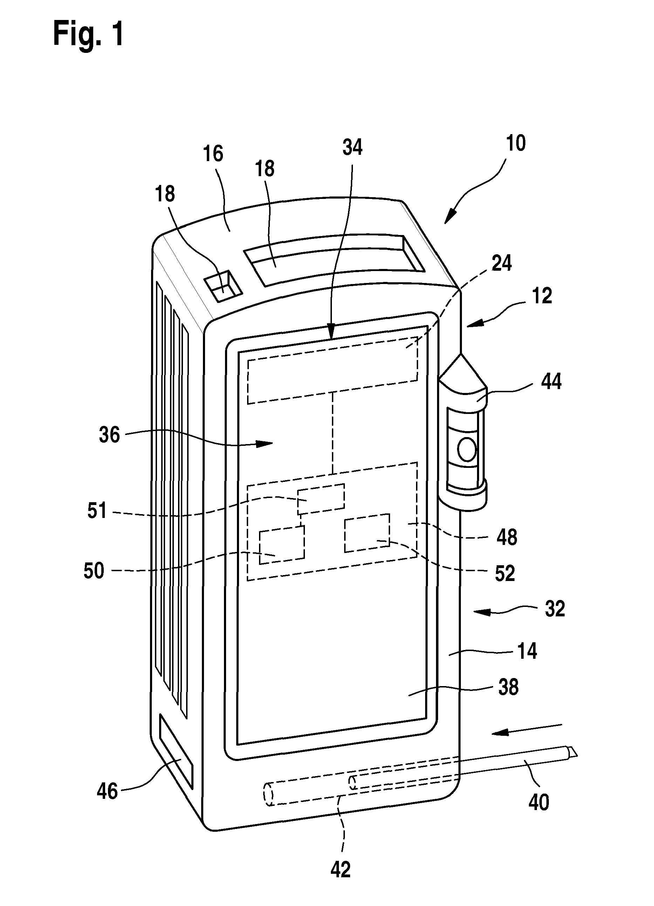

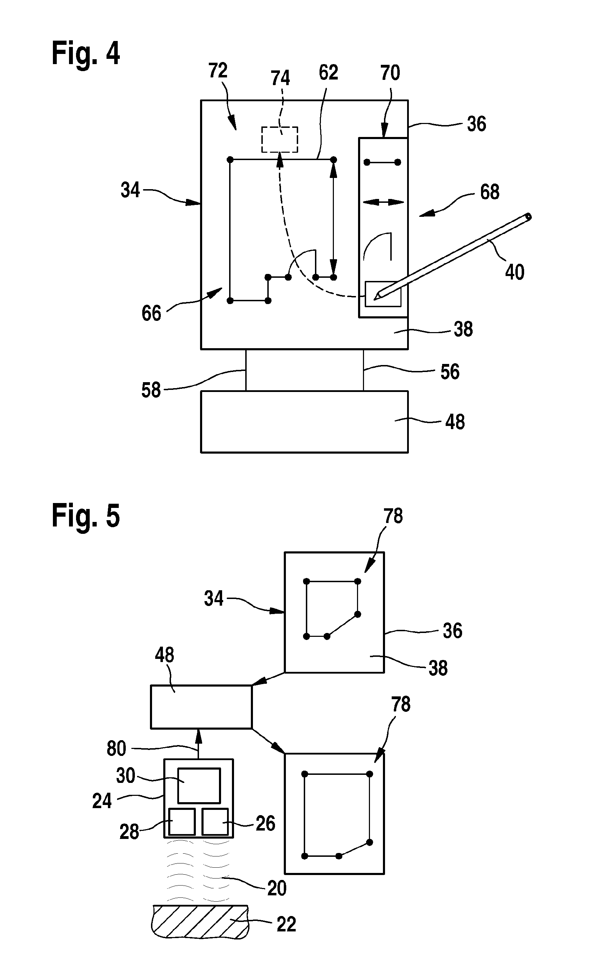

Figur 1 zeigt ein Entfernungsmessgerät 10 in einer perspektivischen Ansicht. Das Entfernungsmessgerät 10 weist ein Gehäuse 12 auf, das eine Bedienseite 14 und eine an die Bedienseite 14 angrenzende Signalseite 16 bildet. Die Signalseite 16 weist optische Bauelemente 18 auf, über welche ein optisches Messsignal 20, insbesondere ein Lasersignal, gesendet bzw. empfangen wird (siehe Figur 5). Mittels des Messsignals 20 kann eine Entfernung des Entfernungsmessgeräts 12 zu einem zu vermessenden Objekt 22 ermittelt werden. Zum Erzeugen, Empfangen und Verarbeiten des Messsignals 20 ist das Entfernungsmessgerät 10 mit einer Messeinheit 24 versehen, welche eine Sendeeinheit 26, eine Empfangseinheit 28 und eine Auswerteeinheit 30 zum Auswerten des empfangenen Messsignals 20 aufweist (siehe Figur 5).

Die Bedienseite 14 weist eine Bedienschnittstelle 32 auf, die zur Kommunikation mit einem Bediener vorgesehen ist. Die Bedienschnittstelle 32 umfasst eine als Bildschirm ausgebildete Anzeigeeinheit 34, die zur Anzeige von Informationen vorgesehen ist. Die Anzeigeeinheit 34 ist als Touchscreen (oder Tastschirm) ausgeführt und bildet eine berührungsempfindliche Eingabeeinheit 36. Hierzu weist die Anzeigeeinheit 34 eine transparente Schirmschicht auf, deren Oberfläche einen Berührungsbereich 38 der Eingabeeinheit 36 bildet, welcher zur Eingabe von Informationen durch dessen Berührung vorgesehen ist. Die Eingabeeinheit 36 ist in diesem Beispiel zum Detektieren einer Berührung mittels einer widerstandsgesteuerten Erfassung vorgesehen. Hierzu weist die Eingabeeinheit eine weitere transparente Schirmschicht (in der Figur nicht dargestellt) auf, die mit einem Abstand zur oberen, den Berührungsbereich bildenden Schirmschicht unterhalb dieser oberen Schirmschicht angeordnet ist. Die Schirmschichten sind leitfähig und als ITO-Schichten (oder Indiumzinnoxidschichten) ausgebildet. Durch eine Berührung der oberen Schirmschicht kommen die Schirmschichten in elektrischen Kontakt zueinander. Durch den Widerstand dieses Kontakts entsteht an der Berührungsstelle eine elektrische Spannung, welche mittels nicht gezeigter Sensoren erfasst werden kann. Die erfasste Spannungsänderung kann zur Bestimmung der Koordinaten der Berührungsstelle benutzt werden.

Der Berührungsbereich 38 bildet eine zu einer Eingabe zur Verfügung stehende Berührungsfläche, die sich vorteilhaft über einen wesentlichen Teil der Bedienseite 14, und zwar über ca. 70 % der Bedienseite 14, erstreckt.

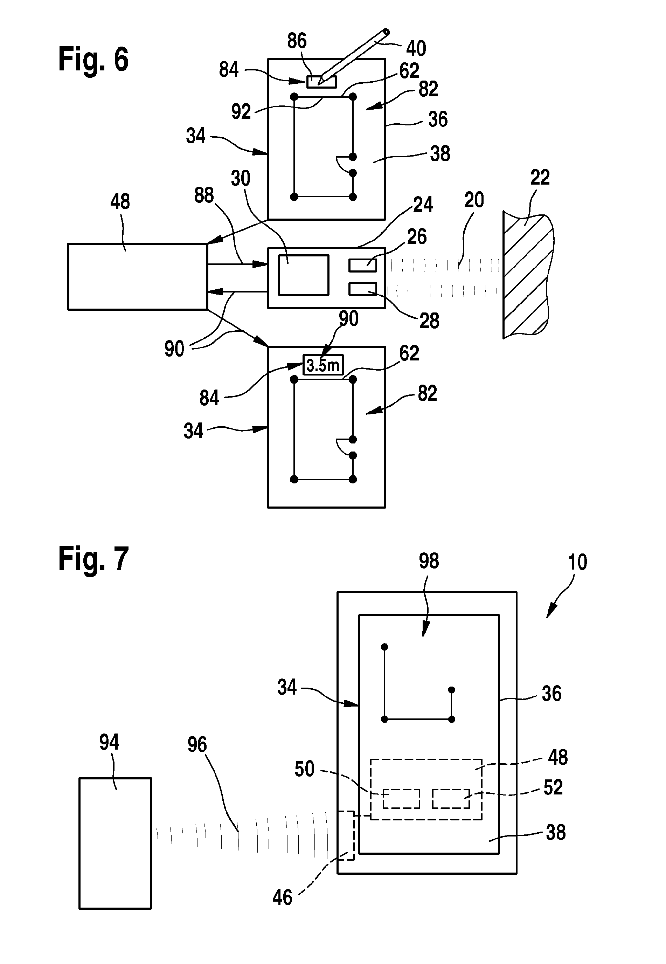

Zum Bedienen der Eingabeeinheit 36 ist das Entfernungsmessgerät 10 mit einem Bedienstift 40 versehen. Im Gehäuse 12 ist ein Aufnahmebereich 42 zur Aufnahme des Bedienstifts 40 ausgespart. Dadurch kann ein Lösen des Bedienstifts 40 vom Gehäuse 12 bei einem Transport des Entfernungsmessgeräts 10 vermieden werden. In einer Ausführungsvariante ist denkbar, dass ein Befestigungsmittel zum Befestigen des Bedienstifts 40 an die Oberfläche des Gehäuses 12 angeformt ist. Am Gehäuse 12 ist ferner eine Libelle 44 fixiert. Außerdem weist das Entfernungsmessgerät 10 eine als Bluetooth-Schnittstelle ausgebildete Datenschnittstelle 46 auf, die zur Herstellung einer Datenverbindung mit einer externen Dateneinheit (siehe z.B. Figur 7) vorgesehen ist.

Zur Durchführung von Betriebsmodi des Entfernungsmessgeräts 10 ist dieses mit einer Steuereinheit 48 versehen. Die Steuereinheit 48 umfasst eine erste Speichereinheit 50, in welcher Programme zur Durchführung der Betriebsmodi des Entfernungsmessgeräts 10 gespeichert sind. Die Steuerung der Betriebsmodi im Zusammenwirken mit der Speichereinheit 50 erfolgt mittels einer als Prozessor oder als Mikrokontroller ausgebildeten Recheneinheit 51. In der Steuereinheit 48 ist außerdem eine zweite Speichereinheit 52 angeordnet, deren Funktion weiter unten beschrieben wird.

Die Steuereinheit 48 ist insbesondere mit Betriebsmodi versehen, die jeweils als Zeichenmodi zur Gestaltung einer Zeichnung vorgesehen sind. Diese Zeichenmodi werden anhand der nachfolgenden Figuren erläutert.

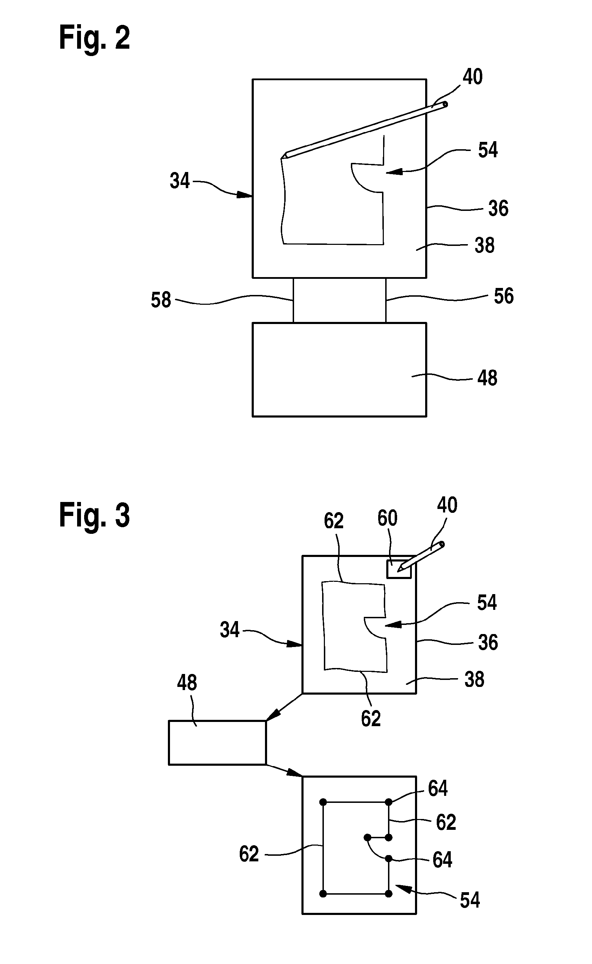

In Figur 2 sind die Eingabeeinheit 36 und die Steuereinheit 48 in einer schematischen Ansicht dargestellt. Es wird angenommen, dass ein Bediener die Vermessung eines Raums mittels des Entfernungsmessgeräts 10 vornimmt. Im Vorfeld der Vermessung kann der Bediener mittels der Eingabeeinheit 36 eine Zeichnung 54 unter der Form einer Handskizze des zu vermessenden Raums herstellen. Hierzu schaltet der Bediener einen Zeichenmodus der Steuereinheit 48 ein, in welchem er zu einem Skizzieren die Spitze des Bedienstifts 40 auf dem Berührungsbereich 38 der Eingabeeinheit 36 bewegen kann. Dabei nimmt die Steuereinheit 48 im Zusammenwirken mit den (in den Figuren nicht gezeigten) Sensoren der Eingabeeinheit 36 Positionsinformationen 56 der sukzessiven Positionen des Bedienstifts 40 auf dem Berührungsbereich 38 auf. Anhand dieser Positionsinformationen 56 stellt die Steuereinheit 48 die Zeichnung 54 her, welche mittels der Anzeigeeinheit 34 angezeigt wird. Dabei werden anhand der Positionsinformationen 56 Steuersignale 58 zur Steuerung der Anzeigeeinheit 34 durch die Steuereinheit 48 ermittelt.

Die hergestellte Handskizze kann ferner im Zeichenmodus durch die Steuereinheit 48 verarbeitet werden. Diese Verarbeitungsfunktion der Steuereinheit 48 ist anhand von Figur 3 erläutert. Der Verarbeitungsvorgang wird durch ein Markieren und/oder ein Betätigen eines durch die Anzeigeeinheit 34 angezeigten Bedienfelds 60 mittels des Bedienstifts 40 oder eines Fingers gestartet. In dieser Figur sowie in den nachfolgenden Figuren ist ein Betätigen eines angezeigten Felds schematisch mit Hilfe eines strahlenden Felds dargestellt. Die Steuereinheit 48 ist mit einer Erkennungsfunktion versehen, mittels welcher einzelne Strecken 62, aus denen die Zeichnung 54 besteht, erkannt werden können. Diese Strecken 62 können außerdem durch eine Eingabe des Bedieners, indem dieser Eckpunkte 64 der Zeichnung 54 mit dem Bedienstift 40 markiert, festgelegt werden. Sind die einzelnen Strecken 62 festgelegt, finden ein Glättungsvorgang und/oder eine Ausrichtung der Strecken 62 statt. Wahlweise kann der Bediener Einfluss auf die Streckenbearbeitung haben, indem er vorgeschlagene Lösungen annimmt oder ablehnt und/oder indem er die Ausrichtung und/oder die Länge einer zu bearbeitenden Strecke 62 festlegt.

Ein weiterer Zeichenmodus der Steuereinheit 48 ist in Figur 4 schematisch dargestellt. In diesem Modus kann der Bediener eine Zeichnung 66 mittels vorgegebener Symbole 68 herstellen. Diese werden in einer Symbolleiste 70 angezeigt, welche seitlich eines Zeichenfelds 72 angezeigt ist. Zur Herstellung der Zeichnung 66 kann ein Symbol 68 mittels des Bedienstifts 40 in der Symbolleiste 70 markiert und in das Zeichenfeld 72 in eine erwünschte Position bewegt werden.

Einer durch die Zeichnung festgelegten Strecke 62 kann ferner ein Anzeigefeld 74 zur Anzeige einer Streckeninformation zugeordnet werden. Hierzu kann der Bediener ein das Anzeigefeld 74 darstellendes Symbol 68 markieren und durch eine in der Figur gestrichelt dargestellte Bewegung in eine erwünschte Position innerhalb des Zeichenfelds 72 platzieren. Das Anzeigefeld 74 im Zeichenfeld 72 stellt einen Bereich der Anzeigeeinheit 34 dar, der in diesem Beispiel zur Anzeige der Länge der zugeordneten Strecke 62 nach deren Vermessung vorgesehen ist. Alternativ oder zusätzlich kann eine zu einer Zuordnung der Strecke 62 vorgesehene Bezeichnung angezeigt werden.

Anhand von Figur 5 wird ein weiterer Zeichenmodus der Steuereinheit 48 erläutert. Es wird angenommen, dass ein Bediener eine Zeichnung 78 eines zu vermessenden Raums, z.B. mittels eines der oben beschriebenen Zeichenmodi, hergestellt hat. Anschließend führt der Bediener eine Vermessung des Raums mittels eines Messungsmodus der Messeinheit 24 durch. Die Steuereinheit 48 ist anhand der durch die Messeinheit 24 erfassten Messergebnisse 80 dazu vorgesehen, die im Vorfeld der Vermessung hergestellte Zeichnung an die Messergebnisse 80 anzupassen, wodurch eine maßstabgetreue Abbildung des vermessenen Raums durch die Steuereinheit 48 gestaltet wird.

Die Steuereinheit 48 ist mit einem weiteren Betriebsmodus versehen, der anhand von Figur 6 erläutert wird. Es wird angenommen, dass der Bediener, z.B. mittels des in Figur 4 gezeigten Zeichenmodus, eine Zeichnung 82 eines zu vermessenden Raums hergestellt hat, wobei einer bestimmten Strecke 62 der Zeichnung 82 ein Anzeigefeld 84 zur Anzeige eines Messergebnisses zugeordnet worden ist. Ferner wird angenommen, dass der Bediener die Strecke 62 vermessen will. Im hier beschriebenen Betriebsmodus der Steuereinheit 48 kann der Bediener das das Anzeigefeld 84 darstellende Symbol 86 mittels des Bedienstifts 40 markieren und betätigen. Dies aktiviert eine Steuerfunktion der Steuereinheit 48, die ein Steuersignal 88 zum Starten eines Messvorgangs der Messeinheit 24 an die Messeinheit 24 übermittelt, welche mittels des Messsignals 20 ein Messergebnis 90 ermittelt. Nach Vermessung wird durch die Steuereinheit 48 in Verbindung mit der Anzeigeeinheit 34 das Messergebnis 90 in einer Längeneinheit im entsprechenden Anzeigefeld 84 angezeigt. In einer Ausführungsvariante des Betriebsmodus kann der Bediener ein als Linie ausgebildetes Symbol 92, welches die Strecke 62 darstellt, direkt markieren und betätigen, wodurch der Messvorgang der gewählten Strecke 62 gestartet wird. Außerdem ist denkbar, dass der Bediener, z.B. durch ein Blinken des Symbols 86 und/oder des Symbols 92, zum Starten des Messvorgangs aufgefordert wird.

In Figur 7 ist ein weiterer Zeichenmodus der Steuereinheit 48 dargestellt. In diesem Zeichenmodus wird eine Datenverbindung mit einer externen Dateneinheit 94, wie z.B. einem PDA (Personal Digital Assistant oder persönlicher digitaler Assistent) oder einem Notebook, hergestellt. Anhand von Daten 96, die über die Datenschnittstelle 46 gelesen sind, wird durch die Steuereinheit 48 im Zusammenwirken mit der Anzeigeeinheit 34 eine den Daten entsprechende Zeichnung 98 angezeigt. Alternativ oder zusätzlich zur Anzeige können die importierten Daten in der Speichereinheit 52 gespeichert werden, wo sie für eine spätere Verarbeitung zur Verfügung stehen. Beispielsweise kann über die Datenschnittstelle 46 eine mittels einer externen Einheit hergestellte Zeichnung oder eine Zeichenvorlage importiert werden. In der Speichereinheit 52 können außerdem Zeichnungen gespeichert werden, die vom Bediener mittels der Eingabeeinheit 36 hergestellt sind. In einer weiteren Ausführungsvariante des Entfernungsmessgeräts 10 ist denkbar, dass die Datenschnittstelle 46 als Scanneinheit ausgebildet ist, über welche eine Zeichnung, wie z.B. eine Handskizze, eingescannt werden kann.

In einem weiteren Betriebsmodus der Steuereinheit 48 kann über die Datenschnittstelle 46 ferner ein Programm zur Durchführung der Betriebsmodi, insbesondere der Zeichenmodi der Steuereinheit 48, heruntergeladen werden. Dabei wird eine Datenverbindung zwischen der Datenschnittstelle 46 und der Speichereinheit 50 hergestellt. Hiermit kann der Bediener vorhandene Programme aktualisieren und/oder die Steuereinheit 48 mit erweiterten Betriebsmodi, insbesondere Zeichenmodi, versehen.

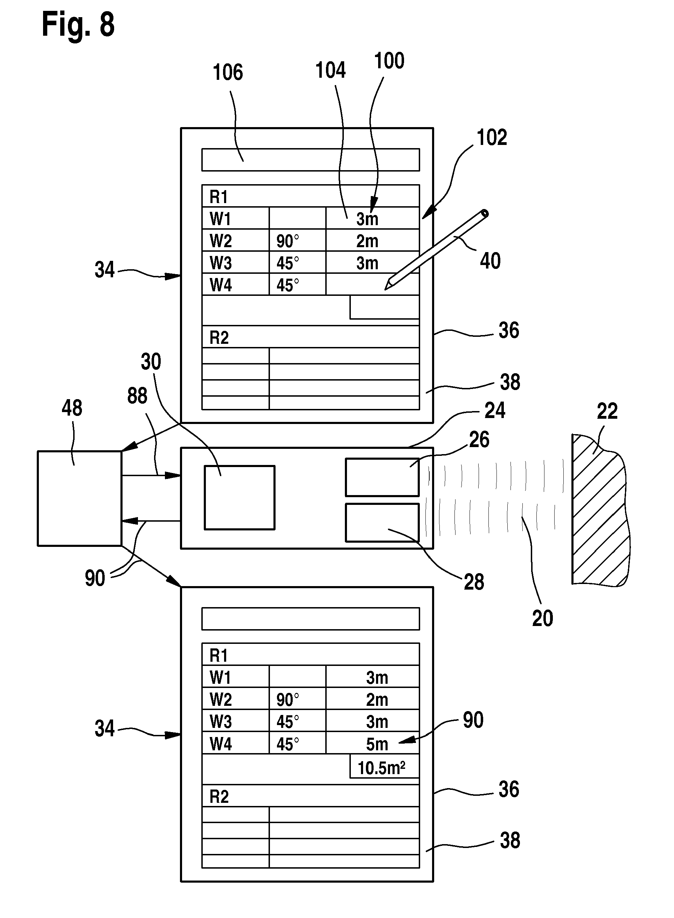

In Figur 8 ist ein weiterer Betriebsmodus der Steuereinheit 48 dargestellt, in welchem Streckeninformationen 100 mittels der Eingabeeinheit 36 verarbeitet werden können. In diesem Betriebsmodus kann insbesondere eine Tabelle 102 hergestellt werden. In dieser Tabelle 102 können Streckeninformationen 100 von zu vermessenden oder vermessenen Räumen eingetragen bzw. ausgewertet werden. Es können Untertabellen R1, R2 usw. hergestellt werden, die jeweils einem Raum zugeordnet sind. Dabei können in Anzeigefeldern 104 der Untertabellen R1, R2 Streckeninformationen 100, und zwar die Bezeichnung einer Strecke, welche z.B. jeweils einer Wand W1, W2 usw. entspricht, die erfasste Länge der Strecke, ein von zwei aneinander angrenzenden Strecken gebildeter Winkel usw. eingetragen werden. Die Bedienung erfolgt mittels des Bedienstifts 40 und über eine Symbol- und/oder Menüleiste 106, die oberhalb der Tabelle 102 angezeigt ist.

Im Betriebsmodus wird ferner dem Anzeigefeld 104 der Tabelle 102 eine Steuerfunktion zum Steuern eines Messvorgangs der Messeinheit 24 zugeordnet. Durch Markieren und Betätigen eines Anzeigefelds 104, welches einer zu vermessenden Strecke entspricht, kann eine Vermessung der Strecke durch die Messeinheit 24 gestartet werden. Dies erfolgt im Zusammenwirken mit der Steuereinheit 48 analog zum Vorgang, welcher anhand von Figur 6 erläutert ist. Nach Vermessung der Strecke wird anhand des Messergebnisses 90 die Länge der Strecke im Anzeigefeld 104 angezeigt. Die Tabelle 102 weist außerdem eine Rechenfunktion auf, die anhand von Streckenlängen und ggf. Winkelwerten eine Fläche oder ein Volumen des entsprechenden Raums automatisch ermittelt.

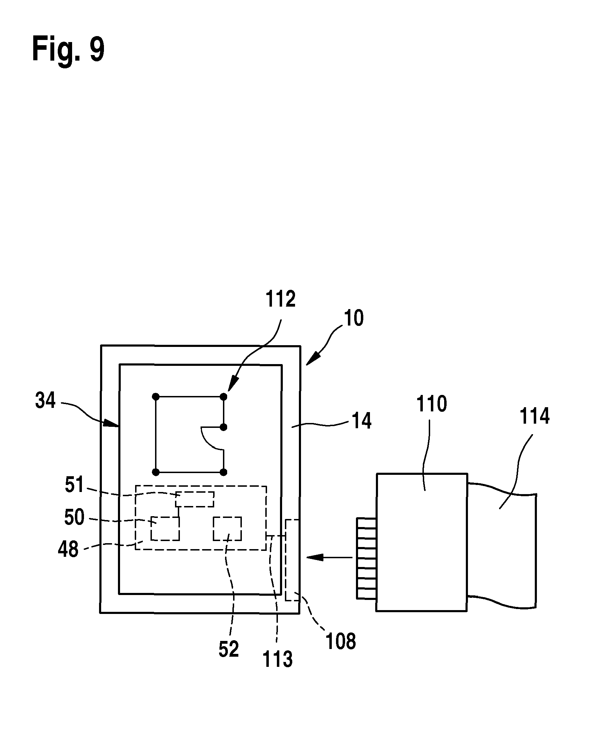

Figur 9 zeigt das Entfernungsmessgerät 10 in einer weiteren Ausführungsform. Hierbei weist das Entfernungsmessgerät 10 eine Datenschnittstelle 108 auf, die zur Herstellung einer Datenverbindung mit einer externen Druckeinheit 110 vorgesehen ist. Diese Druckeinheit 110, welche als Thermodrucker ausgebildet ist, kann über diese Datenschnittstelle 108, die als Adaptereinheit mit einer Befestigungsschnittstelle ausgeführt ist, an dem Gehäuse 12 fixiert werden. Hierzu wird der Grundkörper der Druckeinheit 110 an das Gehäuse 12 angebracht. Es wird in einem Druckmodus der Steuereinheit 48 eine Datenverbindung zwischen der Steuereinheit 48 und einer Steuereinheit der Druckeinheit 110 hergestellt, wobei Druckdaten 113 durch die Steuereinheit 48 an die Druckeinheit 110 übermittelt werden. Mittels der Druckeinheit 110 kann eine vom Bediener hergestellte Zeichnung 112, welche in der Speichereinheit 52 gespeichert und/oder mittels der Anzeigeeinheit 34 angezeigt ist, zur Ausarbeitung eines einen Raum betreffenden Dokuments, wie z.B. eines Protokolls, auf ein Medium 114 gedruckt werden.

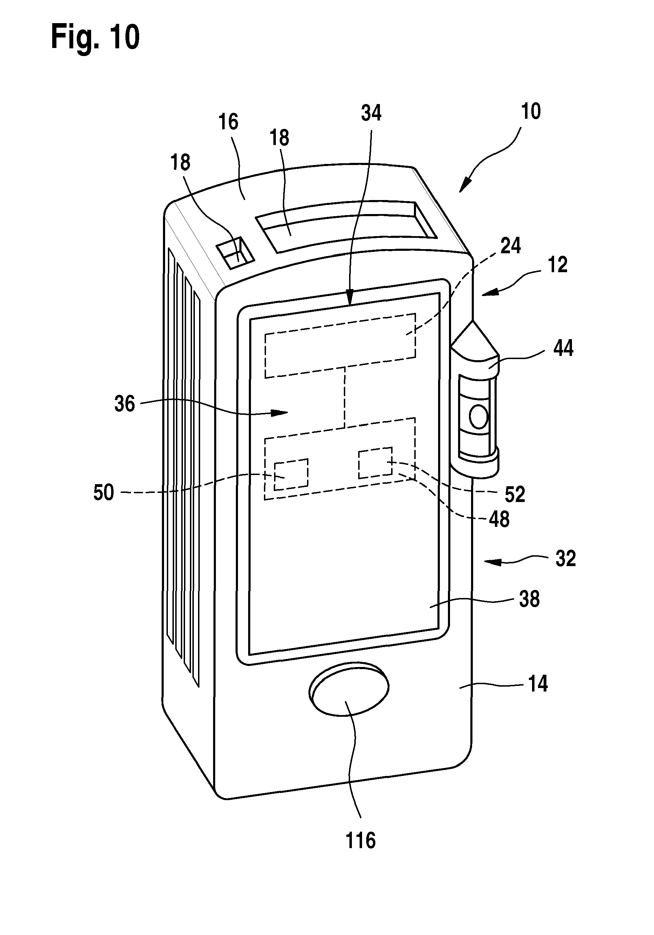

Figur 10 zeigt eine alternative Ausführungsform des Entfernungsmessgeräts 10. Dabei werden für Bauteile, die dem vorhergehenden Ausführungsbeispiel entsprechen, keine neuen Bezugszeichen vergeben. Die Bedienschnittstelle 32 weist zusätzlich zur berührungsempfindlichen Eingabeeinheit 36 ein als Bedientaste ausgebildetes Bedienelement 116 auf. Diesem Bedienelement 116 wird insbesondere eine Steuerfunktion der Steuereinheit 48 zum Steuern eines Messvorgangs der Messeinheit 24 zugeordnet. Ist z.B. das Gehäuse 12 in einer Position gehalten, die das Bedienen der Eingabeeinheit 36 mittels des Bedienstifts 40 oder eines Fingers erschwert, kann vorteilhaft beispielsweise ein Starten eines Messvorgangs, insbesondere in einem in Figur 6 oder 8 beschriebenen Betriebsmodus der Steuereinheit 48, durch ein Betätigen des Bedienelements 116 einfach erreicht werden.

## Patentansprüche

1. Entfernungsmessgerät mit einem Gehäuse (12) und mit einer in dem Gehäuse angeordneten Steuereinheit (48), **dadurch gekennzeichnet, dass** diese Steuereinheit (48) einen Zeichenmodus aufweist, der zur Gestaltung einer Zeichnung (54, 66, 78, 82, 98, 112) vorgesehen ist.

2. Entfernungsmessgerät nach Anspruch 1, **gekennzeichnet durch** eine berührungsempfindliche Eingabeeinheit (36), mittels welcher im Zusammenwirken mit der Steuereinheit (48) die Zeichnung (54) gestaltbar ist.

3. Entfernungsmessgerät nach Anspruch 1 oder 2, **dadurch gekennzeichnet, dass** die Steuereinheit (48) dazu vorgesehen ist, die Zeichnung (54) anhand eines Skizzierens durch einen Bediener zu gestalten.

4. Entfernungsmessgerät nach Anspruch 3, **dadurch gekennzeichnet, dass** die Steuereinheit (48) dazu vorgesehen ist, eine durch einen Bediener skizzierte Strecke (62) zumindest teilautomatisch zu verarbeiten.

5. Entfernungsmessgerät nach einem der vorhergehenden Ansprüche, **gekennzeichnet durch** eine Speichereinheit (52) zum Speichern der Zeichnung (54, 66, 78, 82, 98, 112).

6. Entfernungsmessgerät nach einem der vorhergehenden Ansprüche, **dadurch gekennzeichnet, dass** die Steuereinheit (48) dazu vorgesehen ist, die Zeichnung (78) anhand von einem Messergebnis (80) zumindest teilautomatisch zu gestalten.

7. Entfernungsmessgerät nach Anspruch 6, **dadurch gekennzeichnet, dass** die Steuereinheit (48) dazu vorgesehen ist, die Zeichnung (78) an ein Messergebnis (80) anzupassen.

8. Entfernungsmessgerät nach einem der vorhergehenden Ansprüche, **gekennzeichnet durch** eine Datenschnittstelle (46) und ein Programm der Steuereinheit (48) zur Durchführung des Zeichenmodus, das dazu vorgesehen ist, die Zeichnung (98) anhand von Daten (96) zu gestalten, die über die Datenschnittstelle (46) gelesen sind.

9. Entfernungsmessgerät nach einem der vorhergehenden Ansprüche, **dadurch gekennzeichnet, dass** die Steuereinheit (48) einen Bedienmodus aufweist, in welchem einer durch die Zeichnung (66) festgelegten Strecke (62) ein Anzeigefeld (74) zum Anzeigen einer Streckeninformation durch Eingabe eines Bedieners zuordenbar ist.

10. Entfernungsmessgerät nach einem der vorhergehenden Ansprüche, **dadurch gekennzeichnet, dass** die Steuereinheit (48) dazu vorgesehen ist, einem dargestellten und einer Strecke (62) zugeordneten Symbol (86, 92) eine Steuerfunktion zum Steuern einer Messung der Strecke (62) zuzuordnen.

11. Entfernungsmessgerät nach einem der vorhergehenden Ansprüche, **gekennzeichnet durch** eine Datenschnittstelle (108) zur Herstellung einer Datenverbindung mit einer Druckeinheit (110) und **durch** einen Druckmodus der Steuereinheit (48), in welchem die Steuereinheit (48) anhand der Zeichnung (112) Druckdaten (113) an die Druckeinheit (110) überträgt.

12. Entfernungsmessgerät nach einem der vorhergehenden Ansprüche, **gekennzeichnet durch** eine Datenschnittstelle (46) und einen Betriebsmodus der Steuereinheit (48), der dazu vorgesehen ist, ein Programm zum Durchführen des Zeichenmodus über die Datenschnittstelle (46) aus einer externen Dateneinheit (94) herunterzuladen.

## Claims

1. Distance measuring device comprising a housing (12) and comprising a control unit (48) arranged in the housing, **characterized in that** said control unit (48) has a drawing mode for creating a drawing (54, 66, 78, 82, 98, 112).

2. Distance measuring device according to Claim 1, **characterized by** a touch-sensitive input unit (36) by means of which the drawing (54) can be created in cooperation with the control unit (48).

3. Distance measuring device according to Claim 1 or 2, **characterized in that** the control unit (48) is provided in order to create the word missing (54) with the aid of a sketch by a user.

4. Distance measuring device according to Claim 3, **characterized in that** the control unit (48) is provided in order to process at least semiautomatically a distance (62) sketched by a user.

5. Distance measuring device according to one of the preceding claims, **characterized by** a memory unit (52) for storing the drawing (54, 66, 78, 82, 98, 112).

6. Distance measuring device according to one of the preceding claims, **characterized in that** the control unit (48) is provided in order to create the drawing (78) at least semiautomatically with the aid of a measurement result (80).

7. Distance measuring device according to Claim 6, **characterized in that** the control unit (48) is provided in order to adapt the drawing (78) to a measurement result (80).

8. Distance measuring device according to one of the preceding claims, **characterized by** a data interface (46) and a program of the control unit (48) for carrying out the drawing mode which is provided in order to create the drawing (98) by means of data (96) which are read via the data interface (46).

9. Distance measuring device according to one of the preceding claims, **characterized in that** the control unit (48) has an operating mode in which a distance (62) defined by the drawing (66) can be assigned a display field (74) for displaying a distance information item through input from a user.

10. Distance measurement device according to one of the preceding claims, **characterized in that** the control unit (48) is provided in order to assign a control option for controlling a measurement of the distance (62) to a symbol (86, 92) displayed and assigned to a distance (62).

11. Distance measuring device according to one of the preceding claims, **characterized by** a data interface (108) for establishing a data link to a printing unit (110), and by a printing mode of the control unit (48) in which the control unit (48) transmits printing data (113) to the printing unit (110) with the aid of the drawing (112).

12. Distance measuring device according to one of the preceding claims, **characterized by** a data interface (46) and an operating mode of the control unit (48) which is provided in order to download a program for carrying out the drawing mode from an external data unit (94) via the data interface (46).

## Revendications

1. Appareil de mesure de distance présentant un boîtier (12) et une unité de commande (48) disposée dans le boîtier,
**caractérisé en ce que**
cette unité de commande (48) présente un mode de dessin prévu pour former un dessin (54, 66, 78, 82, 98, 112).

2. Appareil de mesure de distance selon la revendication 1, **caractérisé par** une unité d'introduction (36) sensible au toucher, au moyen de laquelle le dessin (54) peut être formé en coopération avec l'unité de commande (48).

3. Appareil de mesure de distance selon les revendications 1 ou 2, **caractérisé en ce que** l'unité de commande (48) est prévue pour former le dessin (54) à l'aide d'une esquisse formée par l'opérateur.

4. Appareil de mesure de distance selon la revendication 3, **caractérisé en ce que** l'unité de commande (48) est prévue pour traiter de manière au moins partiellement automatique un parcours (62) esquissé par l'opérateur.

5. Appareil de mesure de distance selon l'une des revendications précédentes, **caractérisé par** une unité de mémoire (52) qui conserve le dessin (54, 66, 78, 82, 98, 112).

6. Appareil de mesure de distance selon l'une des revendications précédentes, **caractérisé en ce que** l'unité de commande (48) est prévue pour former de manière au moins partiellement automatique le dessin (78) à l'aide du résultat (80) d'une mesure.

7. Appareil de mesure de distance selon la revendication 6, **caractérisé en ce que** l'unité de commande (48) est prévue pour adapter le dessin (78) au résultat (80) d'une mesure.

8. Appareil de mesure de distance selon l'une des revendications précédentes, **caractérisé par** une interface de données (46) et un programme de l'unité de commande (48) prévu pour exécuter le mode de dessin et pour former le dessin (98) à l'aide de données (96) lues par l'intermédiaire de l'interface de données (46).

9. Appareil de mesure de distance selon l'une des revendications précédentes, **caractérisé en ce que** l'unité de commande (48) présente un mode de fonctionnement dans lequel un champ d'affichage (74) qui affiche une information sur le parcours par introduction par l'opérateur peut être associé à un parcours (62) défini par le dessin (66).

10. Appareil de mesure de distance selon l'une des revendications précédentes, **caractérisé en ce que** l'unité de commande (48) est prévue pour associer une fonction de commande qui commande la mesure du parcours (62) un symbole (86, 92) représenté et associé à un parcours (62).

11. Appareil de mesure de distance selon l'une des revendications précédentes, **caractérisé par** une interface de données (108) qui établit une liaison de données avec une unité d'impression (110) et par un mode d'impression de l'unité de commande (48) dans lequel l'unité de commande (48) transmet à l'unité d'impression (110) des données d'impression (113) à l'aide du dessin (112).

12. Appareil de mesure de distance selon l'une des revendications précédentes, **caractérisé par** une interface de données (46) et un mode de fonctionnement de l'unité de commande (48) prévu pour télécharger un programme d'exécution du mode de dessin depuis une unité externe de données (94) et par l'intermédiaire de l'interface de données (46).
